# FASCICULE DE BREVET EUROPEEN

(11) **EP 1 144 900 B1**
(45) Date de publication et mention de la délivrance du brevet: **20.08.2008**
(21) Numéro de dépôt: 00900595.0
(22) Date de dépôt: 17.01.2000
(51) Int. Cl.: F16L 37/084, F16L 37/12

(54) **DISPOSITIF DE RACCORDEMENT RAPIDE D'UN TUBE A UN ELEMENT RIGIDE**
VORRICHTUNG ZUM SCHNELLVERBINDEN EINES ROHRES AN EINEM STARREN ELEMENT
DEVICE FOR QUICK CONNECTION OF A TUBE TO A RIGID ELEMENT

(30) Priorité: 26.01.1999 FR 9900826
(43) Date de publication de la demande: 17.10.2001
(73) Titulaire: LEGRIS S.A., F-35000 Rennes (FR)
(72) Inventeur: BLIVET, Philippe, F-35200 Rennes (FR)
(74) Mandataire: Robert, Jean-Pierre
(86) Numéro de dépôt international: PCT/FR2000/000087
(87) Numéro de publication internationale: WO 2000/045081

(56) Documents cités:
- EP-A- 0 766 033
- WO-A-88/09459
- CH-A- 264 274
- FR-A- 2 767 181
- US-A- 3 447 819

## Description

La présente invention concerne un dispositif de raccordement rapide d'un tube à un élément rigide.

On connaît des dispositifs de raccordement rapide du type "cartouche" destinés à réaliser la connexion étanche d'un tube dans un alésage d'un élément rigide tel qu'un corps de composant hydraulique ou pneumatique. De manière générale, ce genre de raccord comporte un insert tubulaire possédant extérieurement des moyens de sa fixation dans un logement de l'élément rigide et intérieurement des moyens de verrouillage du tube dans l'insert, un joint d'étanchéité étant disposé entre le tube et le logement de l'élément rigide.

Dans les dispositifs de raccordement rapides les plus répandus, l'insert est vissé dans un taraudage de l'alésage de l'élément rigide et le verrouillage du tube est assuré par une rondelle déformable d'ancrage présentant des griffes radiales qui viennent "mordre" la face extérieure du tube.

L'immobilisation axiale du tube dans l'insert n'est en général pas assurée rigidement dans ce type de raccord pour les raisons suivantes. D'abord il peut exister un jeu fonctionnel entre la rondelle à griffes et l'insert lui même. En outre, et surtout, les griffes sont des lamelles souples qui, en cas de traction sur le tube, travaillent en flambement élastique de sorte que plus l'effet de traction est élevé plus la déformation des dents est importante et plus le déplacement axial du tube par rapport à l'insert est important.

En réalité l'effort de traction sur le tube est engendré par la pression qui règne dans le circuit auquel appartient le tube. Certains circuits sont en permanence sous une pression constante. Le tube prend sa place dans l'insert et dans ce cas les raccords à griffes sont bien suffisants. Dans d'autres circuits la pression est variable sur une plage d'amplitude importante et parfois à une fréquence élevée. C'est notamment le cas des circuits de freinage de véhicules automobiles équipés de systèmes anti-bloqueurs de freinage.

Dans ces dernières conditions d'utilisation, les raccords à griffes, comme celui décrit par le document WO 88/09459,présentent des inconvénients. Chaque griffe est soumise à une contrainte de fatigue en flambement ce qui diminue la durée de vie de la bague. De plus, le volume intérieur du circuit n'est pas constant car le tube se déplace par rapport à l'insert sous l'effet de variations de pression, ce qui peut engendrer des perturbations dans le fonctionnement de certains appareils desservis par le circuit et notamment des dispositifs anti-bloqueurs de freinage. En effet dans ces applications aux circuits de freinage les pressions de service peuvent varier entre 100 bars et 350 bars en crête, avec des pulsations de 15 hertz. WO 9908037 correspondant au FR-A-2 767 181, constitue un état de la technique au sens de l'Article 54(3)CBE.

Un but de l'invention est de concevoir un dispositif de raccordement rapide dans lequel le verrouillage du tube présente une haute rigidité axiale contre les efforts de retrait du tube avec un jeu, sinon nul, du moins fixe et prédéterminé dans le sens du retrait.

En vue de la réalisation de ce but, on prévoit selon l'invention definie dans la revendication 1 un dispositif de raccordement rapide d'un tube équipé d'un bourrelet extérieur à un élément rigide, comportant un insert tubulaire possédant extérieurement des moyens de sa fixation dans un alésage de l'élément rigide et intérieurement des moyens de verrouillage axial du tube par rapport dans l'insert s'opposant au moins à l'extraction du tube, dans lequel les moyens de verrouillage axial comportent un manchon disposé à l'intérieur de l'insert tubulaire et possédant au moins une section transversale large agencée pour prendre appui contre un organe de butée intérieur de l'insert tubulaire et une section transversale étroite élastiquement déformable dans une direction radiale entre une configuration de repos de dimension suffisamment restreinte pour former une butée pour un épaulement du bourrelet, de sorte que le manchon forme une entretoise s'opposant au retrait du tube après qu'il a été introduit, et une configuration élastiquement déformée, épanouie pour permettre le passage du bourrelet du tube lors de son introduction, le manchon présentant un passage intérieur continuellement convergent de son extrémité large vers son extrémité étroite.

En service, le manchon s'interpose ainsi entre le bourrelet du tube et l'organe de butée intérieur de l'insert pour former une butée positive de retenue rigide du tube dans l'insert. Au montage, l'introduction du tube dans l'insert s'effectue grâce à l'expansion élastique radiale de la section déformable du manchon qui autorise le passage du bourrelet du tube. Dès que ce bourrelet du tube a franchi la section déformable du manchon, celle-ci se rétracte derrière l'épaulement pour former une butée s'opposant au retrait du tube. Les efforts de retrait exercés axialement sur le tube sont ainsi repris, entre l'épaulement du bourrelet et l'organe de butée intérieur de l'insert, par le manchon qui forme une entretoise indéformable.

Selon un mode de réalisation avantageux du manchon, l'extrémité large du manchon présente une section transversale de forme polygonale, tandis que l'extrémité étroite de ce manchon présente une section transversale composée d'une succession d'arcs de cercle dont les intersections sont reliées aux sommets de la section polygonale de l'extrémité large par des arêtes longitudinales entre lesquelles le manchon présente des facettes extérieures galbées. On obtient ainsi un manchon ayant une capacité intrinsèque de déformation élastique radiale et présentant un encombrement radial réduit, ainsi qu'une bonne résistance à la compression. Les arêtes longitudinales renforcent en outre la résistance à la compression du manchon en s'opposant à son flambement.

Avantageusement, le manchon est réalisé en acier embouti. Le manchon présente ainsi des caractéristiques d'élasticité et de résistance mécanique optimales, tout en étant de fabrication particulièrement simple et peu coûteuse.

L'organe de butée de l'insert tubulaire peut quant à lui être réalisé sous la forme d'un simple épaulement intérieur ou encore sous la forme d'une encoche dans laquelle est sertie l'extrémité large du manchon. Dans ce second cas, l'extrémité large du manchon pourra être épanouie vers l'extérieur pour former un collet serti dans l'encoche du manchon.

On prévoit également, selon l'invention, une cartouche de conditionnement du dispositif ci-dessus selon la revendication 10.

D'autres caractéristiques et avantages de l'invention apparaîtront à la lecture de la description qui suit de modes de réalisation particuliers, donnés à titre d'exemples non limitatifs.

Il sera fait référence aux dessins en annexe, parmi lesquels :
- La figure 1 est une vue en coupe axiale d'une cartouche d'un dispositif de raccordement conforme à un premier mode de réalisation;
- la figure 2 est une vue de détail en perspective du manchon seul, extrait du dispositif de la figure 1;
- la figure 3 est une vue de détail en coupe axiale du manchon de la figure 2 ;
- les figures 4 et 5 sont des vues respectivement selon les flèches IV et V de la figure 3 ;
- les figures 6 et 7 sont des vues en coupe axiale illustrant le montage du dispositif de raccordement dans un logement associé de l'élément rigide auquel le tube doit être raccordé ;
- les figures 8 et 9 sont des vues en coupe axiale illustrant l'introduction et le verrouillage axial du tube dans l'insert ;
- la figure 9a est une vue agrandie de la zone encadrée A de la figure 9 ;
- la figure 10 est une vue en coupe axiale d'une cartouche d'un dispositif de raccordement conforme à un mode de réalisation de l'invention ;
- la figure 11 est une vue en coupe axiale du dispositif qui est monté dans un logement associé de l'élément rigide et auquel le tube avec un bourrelet selon l'invention est raccordé.

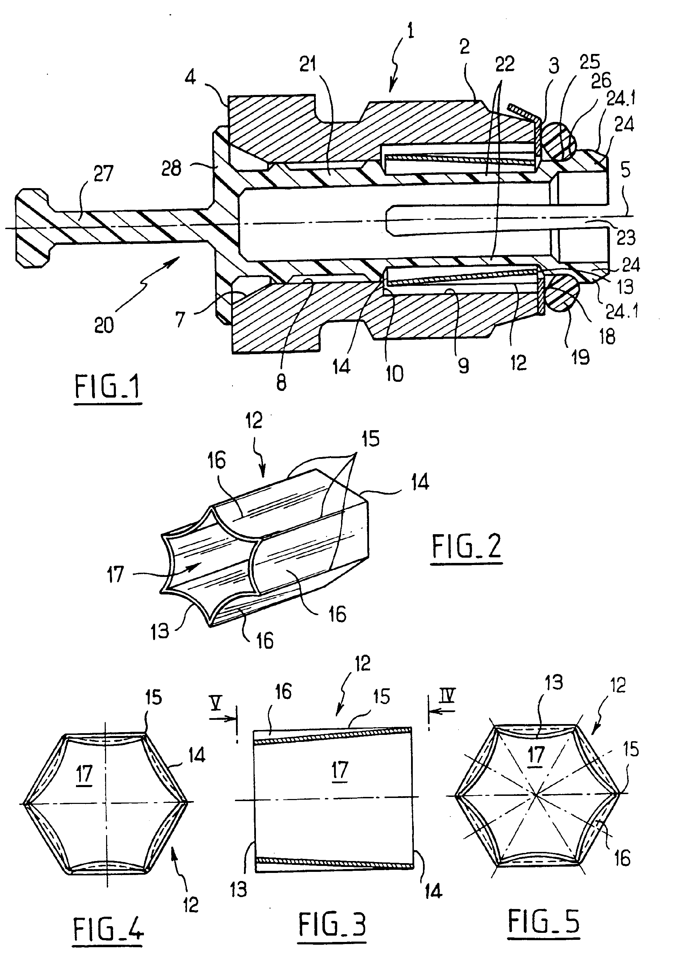

En référence aux figures 1 à 9 et en particulier à la figure 1, le dispositif de raccordement rapide d'un tube à un élément rigide selon l'invention comporte un insert tubulaire 1 présentant un filetage extérieur 2 de fixation, une face transversale avant 3 et une face transversale arrière 4.

L'insert tubulaire 1 présente intérieurement un alésage étagé d'axe 5. Cet alésage possède successivement, de la face arrière 4 à la face avant 3, un chanfrein d'entrée 7, une première portion cylindrique 8 et une seconde portion cylindrique 9 de plus grand diamètre que la première portion 8. Un épaulement transversal intérieur 10 sépare les première et seconde portions 8 et 9.

Un manchon de verrouillage 12 est disposé dans la seconde portion cylindrique 9 de l'alésage étagé de l'insert 1. Comme cela est mieux visible aux figures 2 à 5, ce manchon de verrouillage présente une extrémité avant étroite 13 et une extrémité arrière large 14. L'extrémité avant étroite 13 présente une section transversale composée d'une succession d'arcs de cercle rentrants. Les arcs de cercle forment entre eux des intersections qui sont ici relativement anguleuses, mais pourront avantageusement être plus arrondies pour faciliter la fabrication du manchon 12. L'extrémité arrière large 14 présente quant à elle une section transversale polygonale (ou quasi polygonale avec des côtés qui peuvent être légèrement incurvés vers l'extérieur). Des arêtes longitudinales de rigidification 15, sensiblement parallèles entre elles, relient les sommets de la section polygonale de l'extrémité arrière large 14 aux intersections des arcs de cercle de la section de l'extrémité avant étroite 13. Entre les arêtes 15, le manchon 12 présente des facettes latérales extérieures 16 galbées et concaves. En l'espèce, les arêtes 15 sont au nombre de six, la section de l'extrémité arrière large 14 étant hexagonale. La définition détaillée de la forme du manchon 12 est en outre définie par les figures 2 à 5 qui sont données à titre descriptif.

Le manchon 12 peut avantageusement être réalisé en acier embouti. Sa fabrication est ainsi simple et rapide, et donc peu coûteuse. L'utilisation de l'acier permet de réunir des caractéristiques d'élasticité et de résistance mécanique à la compression satisfaisantes, ce matériau étant en outre peu coûteux et bien adapté à une fabrication par emboutissage. L'épaisseur du manchon 12 dépend des dimensions du raccord et du degré de sollicitations auquel il est soumis. Pour les dispositifs de raccordement utilisés dans le domaine de l'automobile, une épaisseur comprise entre 0,1 et 0,2 millimètre se révèle optimale. De même, le nombre d'arêtes 15 du manchon 12 peut être quelconque mais sera de préférence compris entre 3 et 12.

Le manchon 12 présente ainsi un passage intérieur 17 d'axe 5 qui est continuellement convergent de l'extrémité arrière large 14 vers l'extrémité avant étroite 13 du manchon 12. La forme en succession d'arcs de cercle de l'extrémité avant étroite 13 et la forme galbée des facettes latérales 16 procurent au manchon 12, et en particulier à son extrémité avant étroite 13, une capacité de déformation élastique selon une direction radiale. Autrement dit, l'extrémité avant étroite 13 du manchon 12 est élastiquement expansible.

Le manchon 12 présente une longueur voisine de celle de la seconde portion cylindrique 9 de l'alésage de l'insert tubulaire 1. Son extrémité arrière large 14 est en butée contre l'épaulement intérieur 10 de l'insert 1. Son extrémité avant étroite 13 est en butée contre une rondelle 18 disposée contre la face avant 3. Cette rondelle 18 possède des pattes extérieures 18.1 rabattues vers l'avant d'un angle inférieur à l'angle droit et élastiquement flexibles.

Le dispositif de raccordement comporte également un joint d'étanchéité annulaire 19 destiné à assurer l'étanchéité entre le tube et l'élément rigide auquel il doit être raccordé, comme cela sera mieux expliqué ultérieurement.

Avant le montage du dispositif sur l'élément rigide objet du raccordement, le joint d'étanchéité 19 est maintenu en position, en appui contre la rondelle 18 par un fourreau intérieur de maintien 20. L'ensemble constitué de l'insert 1, du manchon 12, du joint 19 et du fourreau forme ainsi une cartouche pré-assemblée prête à l'emploi.

Le fourreau 20 comporte une portion de fixation 21 emboîtée dans la première portion cylindrique 8 de l'alésage de l'insert tubulaire 1, et deux branches élastiquement déformables 22 séparées par des fentes 23. Les branches déformables 22 possèdent une extrémité avant libre 24 qui s'étend en saillie de la face avant 3 de l'insert tubulaire 1 et qui présente un siège 25 délimité à l'avant par une saillie en forme d'épaulement conique 26 constituant une butée pour le joint 19. L'extrémité avant libre 24 des branches 22 présente de plus un chanfrein extérieur 24.1.

En arrière de la portion de fixation 21, le fourreau est pourvu d'une poignée 27 et d'une garde d'obturation et de positionnement 28 qui vient en butée contre la face arrière 4 de l'insert 1. La garde 28 bouche ainsi l'alésage de l'insert tubulaire 1, ce qui évite la pénétration d'impuretés lors des opérations de transport, de stockage et de montage. D'autre part, la distance entre la garde 28 et l'épaulement conique 26 délimitant le siège du joint 19 est choisie pour que l'épaulement 26 assure un maintien avec faible jeu du joint 19, de la rondelle 18 et du manchon de verrouillage 12 contre l'épaulement intérieur 10 de l'insert tubulaire 1.

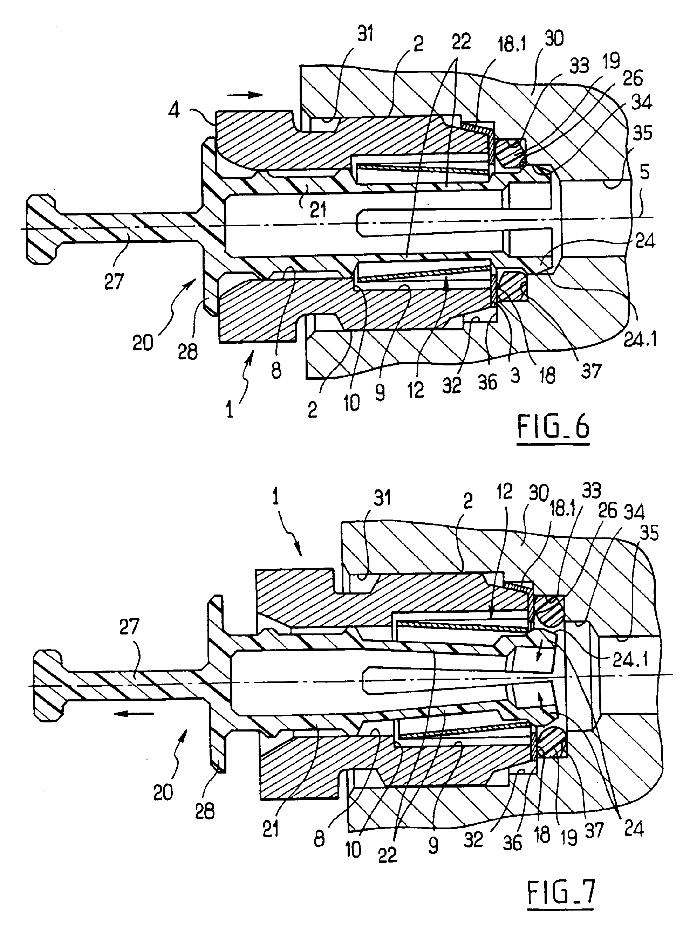

Le montage du dispositif de raccordement sur un élément rigide 30 s'effectue de la manière suivante, conformément aux illustrations des figures 6 à 9.

L'élément rigide 30 doit préalablement être alésé pour former un alésage étagé. Cet alésage se divise en quatre portions de diamètres rétrécissant de l'extérieur vers l'intérieur. On distingue ainsi une portion de grand diamètre 31 taraudée et destinée à recevoir l'insert 1, une portion 32 de plus petit diamètre que la portion 31 et destinée à recevoir les pattes 18.1 de la rondelle 18, une portion 33 de plus petit diamètre que la portion 32 et destinée à recevoir le joint 19, une portion 34 dont le diamètre correspond sensiblement au diamètre extérieur du tube à raccorder et une portion 35 dont le diamètre est sensiblement égal au diamètre intérieur de ce tube.

Au montage, l'insert 1 est vissé par son filetage extérieur 2 dans le taraudage de la première portion 32 de l'alésage étagé de l'élément rigide 30. Le joint d'étanchéité 19 se comprime extérieurement pour pénétrer dans la seconde portion 33 de l'alésage et sur chacun de ses flancs entre la rondelle 18 et un épaulement 37 séparant les seconde et troisième portions 33 et 34 de l'alésage de l'élément rigide 30. Simultanément, les pattes élastiques 18.1 de la rondelle 18 pénètrent dans la portion 32 de l'alésage de l'insert 1 et, par friction, immobilisent en rotation la rondelle 18, ce qui évite que celle-ci ne soit entraînée en rotation par l'insert 1 et n'altère par frottement le joint 18. Les extrémités libres 24 des branches 22 du manchon de maintien 20 pénètrent dans la troisième portion 34 de l'alésage de l'élément rigide 30 et leur chanfrein extérieur 24.1 force les branches 22 du fourreau 20 à se plier légèrement l'une vers l'autre par déformation élastique, ce qui libère le fourreau et évite le frottement du fourreau sur le joint en fin de vissage de l'insert 1. En fin de vissage, la rondelle 18 vient en butée contre un épaulement 36 séparant les première et seconde portions 32 et 33 de l'alésage étagé de l'élément rigide 30.

Comme cela est illustré par la figure 7, un effort de traction est exercé sur le fourreau 20 par l'intermédiaire de la poignée 27 pour retirer le fourreau de maintien 20 de l'insert tubulaire 1. La portion de fixation 21 glisse à l'intérieur de la première portion cylindrique 8. L'extrémité 24 des branches 22 du fourreau 20, qui glisse d'abord sur le joint 19 puis sur l'extrémité avant étroite 13 du manchon de verrouillage 12, force le fléchissement élastique des branches 22 l'une vers l'autre, pour permettre le retrait du fourreau 20 sans forcer sur l'élasticité du joint 19 et du manchon 12.

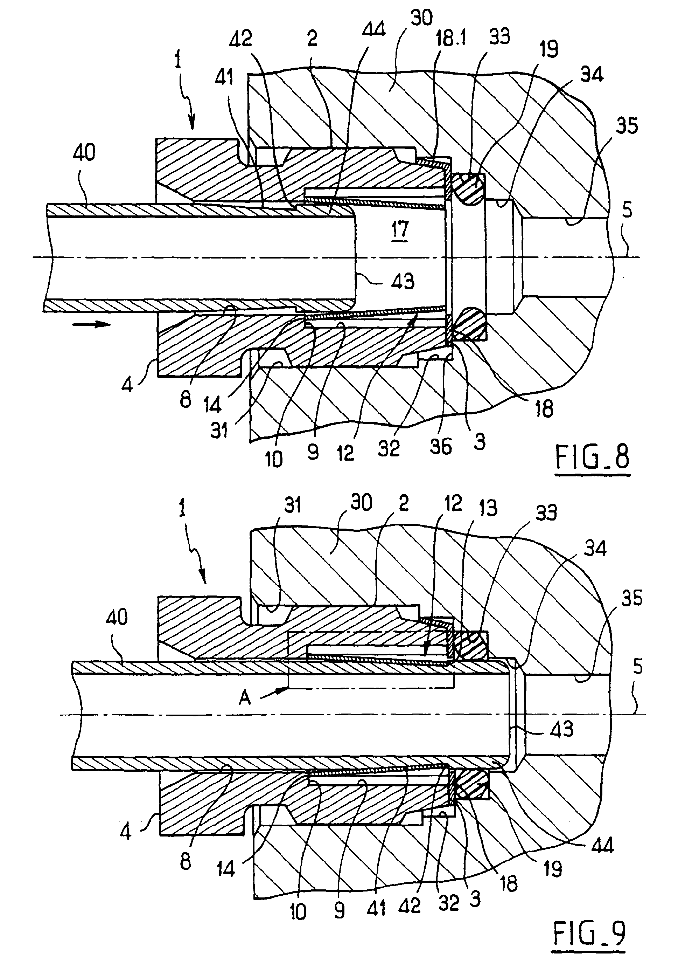

Le fourreau 20 étant retiré, le tube 40, qui doit être raccordé à l'élément rigide 30, est introduit dans l'insert tubulaire 1 conformément à la figure 8. Ce tube présente un diamètre extérieur voisin du diamètre de la première portion cylindrique 8 de l'alésage de l'insert tubulaire 1 et présente extérieurement une gorge 41 qui définit un épaulement 42. En l'espèce, la gorge 41 est de forme conique convergente vers la face terminale avant libre 43 du tube 40.

L'extrémité avant 44 du tube 40, qui est arrondie ou chanfreinée pénètre dans le passage intérieur convergeant 17 du manchon 12 et, glissant sur la surface intérieure du manchon 12, force l'expansion élastique de l'extrémité avant 44 du manchon 12 pour permettre le passage de l'extrémité avant du tube 40. Lorsque l'épaulement 42 franchit l'extrémité avant étroite 13 du manchon 12, celle-ci se rétracte spontanément dans la gorge 41 sous l'effet de son élasticité propre et verrouille ainsi le tube 40 dans l'insert tubulaire 1.

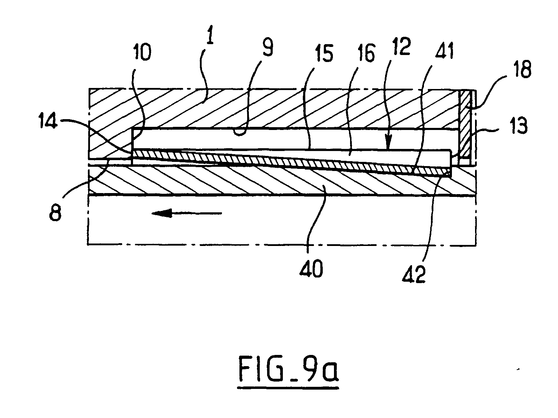

Comme cela est illustré par les figures 9 et 9a, tout effort d'extraction exercé sur le tube 40, en particulier du fait de la montée en pression à l'intérieur du tube 40, est repris, via l'épaulement 42, par le manchon 12 qui est lui-même immobilisé axialement en butée contre l'épaulement intérieur 10 de l'insert tubulaire 1. Le manchon 12 est ainsi soumis à d'importants efforts de contrainte en compression qu'il encaisse en toute sécurité grâce à sa forme particulière précédemment décrite et illustrée aux figures 2 à 5. En particulier les arêtes longitudinales de rigidification 15 renforcent sensiblement la résistance du manchon 12 en évitant notamment tout risque de flambement.

Au-delà de l'épaulement 42, l'extrémité avant 44 du tube 40 est en contact avec le joint d'étanchéité 19 et le comprime légèrement, de sorte que l'étanchéité entre le tube 40 et l'élément rigide 30 est assurée.

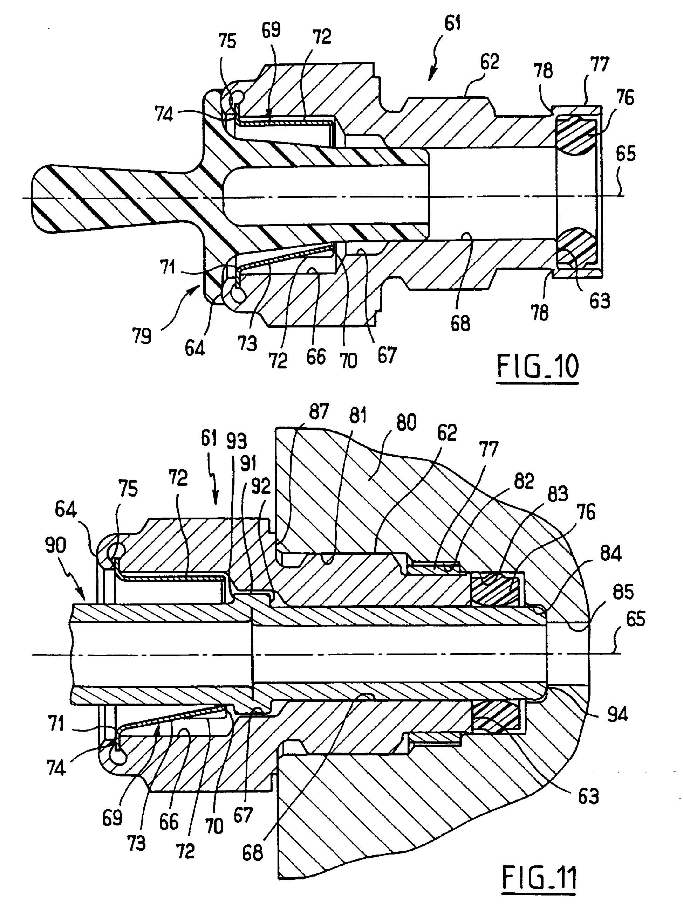

Les figures 10 et 11 illustrent un second mode de réalisation de l'invention, dans lequel le manchon de verrouillage est serti dans l'insert.

Comme précédemment, le dispositif comporte un insert tubulaire 61 présentant un filetage extérieur 62 de fixation, une face transversale avant 63 et une face transversale arrière 64. L'insert tubulaire 61 présente intérieurement un alésage étagé d'axe 65. Cet alésage possède successivement, de la face arrière 64 à la face avant 63, des première, seconde et troisième portions cylindriques 66,67,68 ayant des diamètres dégressifs.

Un manchon de verrouillage 69 est disposé dans la première portion 66 de l'alésage de l'insert 61. Ce manchon de verrouillage présente une extrémité avant étroite 70 et une extrémité arrière large 71. L'extrémité avant étroite 70 présente une section transversale composée d'une succession d'arcs de cercle rentrants formant entre eux des intersections anguleuses ou légèrement arrondies. L'extrémité arrière large 71 présente quant à elle une section transversale polygonale (ou quasi polygonale avec des côtés qui peuvent être légèrement incurvés vers l'extérieur). Des arêtes longitudinales de rigidification 72, sensiblement parallèles entre elles, relient les sommets de la section polygonale de l'extrémité arrière large 71 aux intersections des arcs de cercle de la section de l'extrémité avant étroite 70. Entre les arêtes 72 le manchon 69 présente des facettes latérales extérieures 73 galbées et concaves. En l'espèce, et à la différence du premier mode de réalisation, les arêtes 72 sont au nombre de cinq, la section de l'extrémité large 71 étant pentagonale.

D'autre part, contrairement au premier mode de réalisation, le manchon 69 est ici serti dans la première portion 66 de l'alésage de l'insert 61. Plus précisément, l'extrémité arrière large 71 du manchon 69 est épanouie vers l'extérieur pour former un collet 74 qui est serti dans une encoche périphérique 75 ménagée au voisinage de l'extrémité arrière de l'insert 61 dans la première portion 66 de l'alésage de cet insert. Le manchon 69 fait donc corps avec l'insert 61.

Le dispositif de raccordement comporte également un joint d'étanchéité annulaire 76 destiné à assurer l'étanchéité entre le tube et l'élément auquel il doit être raccordé. Avant le montage du dispositif sur l'élément rigide objet du raccordement, le joint d'étanchéité 76 est maintenu en position, en appui contre la face avant 63 de l'insert, par une jupe de maintien et de protection 77 autocassante, en forme de bague, reliée à l'extrémité avant l'insert 61 par une zone 78 de faible résistance mécanique qui se rompt au montage pour se rétracter sur l'insert et libérer le joint 76. Ainsi, le dispositif forme-t-il une cartouche plus simple que dans la première variante décrite.

Avant montage, le dispositif est pourvu d'un fourreau 79 formant uniquement un bouchon d'obturation de l'extrémité arrière de l'alésage de l'insert 61 là où est implanté le manchon 69. L'ensemble constitué de l'insert 61, du manchon 72 avec sa jupe autocassante 77, du joint 76 et du fourreau 79 forme ainsi une cartouche pré-assemblée prête à l'emploi.

Préalablement au montage, l'élément rigide 80 objet du raccordement doit être alésé. L'alésage ainsi formé se divise en trois portions de diamètres dégressifs de l'extérieur vers l'intérieur. On distingue ainsi une première portion de grand diamètre 81 taraudée et destinée à recevoir le filetage extérieur 62 de l'insert 61, une seconde portion 82 de plus petit diamètre que la portion 81 et destinée à recevoir la jupe autocassante 77, une troisième portion 83 de diamètre inférieur au diamètre extérieur de la jupe de protection autocassante 77 et destinée à recevoir le joint 76, une quatrième portion 84 dont le diamètre correspond sensiblement au diamètre extérieur du tube à raccorder, et une cinquième portion 85 dont le diamètre est sensiblement égal au diamètre intérieur de ce tube.

Au montage l'insert 61 est vissé par son filetage extérieur 62 dans le taraudage de la première portion 81 de l'alésage étagé de l'élément rigide 80. La jupe de protection autocassante 77, lorsqu'elle parvient en appui contre l'épaulement formé entre les seconde et troisième portions 82 et 83 de l'alésage étagé de l'élément rigide 80, se détache de l'insert 61 par rupture de la zone 78 de faible résistance mécanique et se rétracte en coulissant sur l'extrémité avant de l'insert 61 (qui est de diamètre légèrement inférieur au diamètre intérieur de la jupe 77). L'insert 61, poursuivant sa course à l'intérieur de l'alésage étagé de l'élément rigide 80, pousse le joint d'étanchéité 76, en appui contre la face avant 63 de l'insert, à l'intérieur de la troisième portion 83 de l'alésage étagé de l'élément rigide 80. En fin de course, un épaulement 87 de l'insert 61 vient en butée contre l'élément rigide 80.

Le fourreau 79 étant retiré, le tube 90, qui doit être raccordé à l'élément rigide 80, est introduit dans l'insert 61. Ce tube possède un diamètre extérieur voisin du diamètre de la troisième portion 68 de l'alésage étagé de l'insert 61 et présente un bourrelet 91 agencé pour être reçu dans la seconde portion 67 de l'alésage étagé de l'insert 61. Le bourrelet 91 du tube 90 forme un épaulement avant 92 et un épaulement arrière 93.

Le tube 90 est introduit à fond de course, jusqu'à ce que son extrémité avant 94 parvienne en butée contre l'épaulement formé entre les quatrième et cinquième portions 84 et 85 de l'alésage étagé de l'élément rigide 80. Lors de cet enfoncement du tube 90, le bourrelet 91 pénètre dans le passage intérieur convergent du manchon 69 et, glissant sur la surface intérieure de ce manchon, force l'expansion élastique de l'extrémité avant étroite 70 du manchon 69 pour permettre son passage. Lorsque le bourrelet 91 à entièrement franchi l'extrémité avant étroite 70 du manchon 69, cette dernière se rétracte spontanément derrière l'épaulement arrière 93 sous l'effet de son élasticité propre et verrouille ainsi le tube 90 dans l'insert tubulaire 61. Tout effort d'extraction exercé sur le tube 90 est repris, via le bourrelet 91, par le manchon 69 qui est lui-même immobilisé axialement par son sertissage dans l'encoche périphérique 75 de l'insert tubulaire 61.

L'invention n'est pas limitée aux modes de réalisation qui viennent d'être d'écrits, mais englobe au contraire toute variante reprenant, avec des moyens équivalents, ses caractéristiques essentielles. En particulier, bien qu'il ait été décrit un manchon de verrouillage présentant des facettes latérales extérieures concaves, il sera également possible de réaliser un manchon de verrouillage présentant des facettes extérieures convexes, l'extrémité étroite de ce manchon présentant alors une section hexagonales et l'extrémité large présentant une section circulaire ou composée d'une succession d'arcs de cercle sortants. De manière générale, il sera d'ailleurs possible de réaliser un manchon de verrouillage présentant une forme quelconque ayant une extrémité large et une extrémité étroite et possédant une capacité d'expansion élastique de son extrémité étroite.

## Revendications

1. Dispositif de raccordement rapide d'un tube (90) à un élément rigide (80), comportant le tube (90) et comportant un insert tubulaire (61) possédant extérieurement des moyens (62) de sa fixation dans un alésage de l'élément rigide (80) et intérieurement des moyens de verrouillage axial du tube (90) dans l'insert (61) s'opposant au moins à l'extraction du tube, **caractérisé en ce que** le tube (90) comporte un bourrelet extérieur (91) avec un épaulement arrière (93) et **en ce que** les moyens de verrouillage axial comportent un manchon (69) disposé à l'intérieur de l'insert tubulaire (61) et possédant au moins une extrémité de section transversale large agencée pour prendre appui contre une butée intérieure (75) de l'insert tubulaire (61) et une extrémité de section transversale étroite élastiquement déformable dans une direction radiale entre une configuration de repos de dimension suffisamment restreinte pour former une butée pour l'épaulement arrière (93) du bourrelet (91) de sorte que le manchon (69) forme une entretoise s'opposant au retrait du tube après qu'il a été introduit, et une configuration élastiquement déformée, épanouie pour permettre le passage du bourrelet (91) du tube (90) lors de son introduction, le manchon (69) présentant un passage intérieur (17) continuellement convergent de son extrémité large (71) vers son extrémité étroite (70).

2. Dispositif selon la revendication 1, **caractérisé en ce que** l'extrémité large (71) du manchon (69) présente une section transversale de forme polygonale, tandis que l'extrémité étroite (70) de ce manchon présente une section transversale composée d'une succession d'arcs de cercle dont les interesections sont reliées aux sommets de la section polygonale de l'extrémité large (71) par des arêtes sensiblement longitudinales (72) entre lesquelles le manchon (69) présente des facettes extérieures (73) galbées.

3. Dispositif selon la revendication 2, **caractérisé en ce que** les facettes extérieures (73) du manchon (69) sont concaves.

4. Dispositif selon la revendication 3, **caractérisé en ce que** les arêtes longitudinales de rigidification (72) du manchon (69) sont sensiblement parallèles entre elles.

5. Dispositif selon l'une des revendications 2 à 4, **caractérisé en ce que** le manchon (69) est réalisé en acier embouti et présente une épaisseur comprise entre 0,1 et 0,2 millimètres.

6. Dispositif selon l'une des revendications 2 à 5, **caractérisé en ce que** le manchon (69) présente un nombre d'arêtes (72) compris entre 3 et 12.

7. Dispositif selon l'une des revendications précédentes, **caractérisé en ce que** la butée intérieure de l'insert tubulaire (1) est réalisée sous la forme d'un épaulement intérieur (10).

8. Dispositif selon l'une des revendications 1 à 6, **caractérisé en ce que** la butée intérieure de l'insert tubulaire (61) est réalisée sous la forme d'une encoche (75) dans laquelle est sertie l'extrémité large (71) du manchon (69).

9. Dispositif selon la revendication 8, **caractérisé en ce que** l'extrémité large (71) du manchon (69) est épanouie vers l'extérieur pour former un collet (74) qui est serti dans l'encoche (75) de l'insert (61).

10. Cartouche de conditionnement du dispositif selon la revendication 9, **caractérisée en ce que** l'extrémité de l'insert tubulaire (61) située à l'opposé de l'encoche (75) de retenue du manchon est prolongée d'une jupe (77) autocassante de maintien d'un joint d'étanchéité (76) et **en ce qu'**elle comporte un bouchon (79) d'obturation de l'alésage de l'insert équipé du manchon (69).

## Claims

1. A quick coupling device for coupling a tube (90) to a rigid element (80), the device comprising the tube (90) and comprising a tubular insert (61) possessing external means (62) for fixing it in a bore in the rigid element (80) and internal means for axially locking the tube (90) in the insert (61) opposing at least extraction of the tube, the device being **characterized in that** the tube (90) comprises a external bead (91) with a rear shoulder (93) and **in that** the axial locking means comprise a sleeve (69) placed inside the tubular insert (61) and possessing at least a broad cross-section arranged to bear against an internal abutment member (75) of the tubular insert (61) and a narrow cross-section that is elastically deformable in a radial direction between a rest configuration that is small enough to form an abutment for the rear shoulder (93) of the bead (91), such that the sleeve (69) forms a spacer opposing withdrawal of the tube after it has been inserted, and an elastically deformed configuration where it is expanded to enable the bead (91) of the tube (90) to pass through during insertion thereof, the sleeve (69) having an internal passage (17) that converges continuously from its broad end (71) towards its narrow end (70).

2. A device according to claim 1, **characterized in that** the broad end (71) of the sleeve (69) has a cross-section that is polygonal in shape, while the narrow end (70) of the sleeve has a cross-section made up of a succession of circular arcs whose intersections are connected to the vertices of the polygonal section of the broad end (71) by substantially longitudinal ridges (72) between which the sleeve (69) presents curved outside facets (73).

3. A device according to claim 2, **characterized in that** the outside facets (73) of the sleeve (69) are concave.

4. A device according to claim 3, **characterized in that** the longitudinal stiffening ridges (72) of the sleeve (69) are substantially parallel to one another.

5. A device according to any one of claims 2 to 4, **characterized in that** the sleeve (69) is made of swaged steel and presents thickness lying in the range 0.1 mm to 0.2 mm.

6. A device according to any one of claims 2 to 5, **characterized in that** the sleeve (69) presents a number of ridges (72) lying in the range 3 to 12.

7. A device according to any preceding claim, **characterized in that** the abutment member of the tubular insert (1) is made in the form of an internal shoulder (10).

8. A device according to any one of claims 1 to 6, **characterized in that** the abutment member of the tubular insert (61) is made in the form of a groove (75) in which the broad end (71) of the sleeve (69) is crimped.

9. A device according to claim 8, **characterized in that** the broad end (71) of the sleeve (69) is spread outwards to form a collar (74) which is crimped in the groove (75) of the insert (61).

10. A cartridge for packaging the device according to claim 9, the cartridge being **characterized in that** the end of the tubular insert (61) situated remote from the sleeve-retaining groove (75) is extended by a snap-off skirt (77) for holding a sealing gasket (76), and **in that** it includes a plug (79) for closing the bore of the insert fitted with the sleeve (69).

## Patentansprüche

1. Schnellverbindungsvorrichtung zur Schnellverbindung eines Rohres (90) mit einem starren Element (80), umfassend das Rohr (90) und umfassend einen rohrförmigen Einsatz (61), der außen Mittel (62) für seine Befestigung in einer Bohrung des starren Elements (80) und innen Mittel für eine axiale Verriegelung des Rohres (90) in dem Einsatz (61) aufweist, die sich mindestens dem Herausziehen des Rohres widersetzen, **dadurch gekennzeichnet, dass** das Rohr (90) einen Außenwulst (91) mit einer hinteren Schulter (93) umfasst und dass die Mittel für eine axiale Verriegelung eine Hülse (69) umfassen, die im Inneren des rohrförmigen Einsatzes (61) angeordnet ist und mindestens ein Ende mit einem breiten Querschnitt aufweist, das derart ausgebildet ist, dass es an einem inneren Anschlag (75) des rohrförmigen Einsatzes (61) zur Anlage kommt, sowie ein Ende mit einem schmalen Querschnitt, das in radialer Richtung elastisch verformbar ist, zwischen einer Ruheform mit einer Abmessung, die ausreichend schmal ist, um einen Anschlag für die hintere Schulter (93) des Wulstes (91) zu bilden, sodass die Hülse (69) eine Strebe bildet, die sich dem Auszug des Rohres nach dessen Einfügen widersetzt, und einer elastisch verformten Form, die aufgeweitet ist, um den Durchtritt des Wulstes (91) des Rohres (90) während dessen Einfügen zu ermöglichen, wobei die Hülse (69) einen Innendurchgang (17) aufweist, der von seinem breiten Ende (71) zu seinem schmalen Ende (70) hin kontinuierlich konvergiert.

2. Vorrichtung nach Anspruch 1, **dadurch gekennzeichnet, dass** das breite Ende (71) der Hülse (69) einen polygonalen Querschnitt aufweist, während das schmale Ende (70) dieser Hülse einen Querschnitt aufweist, der aus einer Folge von Kreisbögen zusammengesetzt ist, deren Schnittpunkte mit den Spitzen des polygonalen Querschnitts des breiten Endes (71) über im Wesentlichen längs gerichtete Kanten (72) verbunden sind, zwischen denen die Hülse (69) geschwungene Außenflächen (73) aufweist.

3. Vorrichtung nach Anspruch 2, **dadurch gekennzeichnet, dass** die Außenflächen (73) der Hülse (69) konkav sind.

4. Vorrichtung nach Anspruch 3, **dadurch gekennzeichnet, dass** die längs gerichteten Versteifungskanten (72) der Hülse (69) im Wesentlichen parallel zueinander sind.

5. Vorrichtung nach einem der Ansprüche 2 bis 4, **dadurch gekennzeichnet, dass** die Hülse (69) aus gezogenem Stahl hergestellt ist und eine Dicke zwischen 0,1 und 0,2 Millimeter aufweist.

6. Vorrichtung nach einem der Ansprüche 2 bis 5, **dadurch gekennzeichnet, dass** die Hülse (69) zwischen 3 und 12 Kanten (72) aufweist.

7. Vorrichtung nach einem der vorhergehenden Ansprüche, **dadurch gekennzeichnet, dass** der innere Anschlag des rohrförmigen Einsatzes (1) in Form einer inneren Schulter (10) ausgebildet ist.

8. Vorrichtung nach einem der Ansprüche 1 bis 6, **dadurch gekennzeichnet, dass** der innere Anschlag des rohrförmigen Einsatzes (61) in Form einer Nut (75) ausgebildet ist, in die das breite Ende (71) der Hülse (69) eingedrückt wird.

9. Vorrichtung nach Anspruch 8, **dadurch gekennzeichnet, dass** das breite Ende (71) der Hülse (69) nach außen aufgeweitet ist, um einen Kragen (74) zu bilden, der in die Nut (75) des Einsatzes (61) eingedrückt wird.

10. Kartusche zur Konditionierung der Vorrichtung nach Anspruch 9, **dadurch gekennzeichnet, dass** das Ende des rohrförmigen Einsatzes (61), das der Nut (75) zum Zurückhalten der Hülse entgegengesetzt ist, um eine abscherbare Schürze (77) zum Halten einer Dichtung (76) verlängert ist, und dass sie einen Verschlussstopfen (79) zum Verschließen der Bohrung des mit der Hülse (69) versehenen Einsatzes umfasst.
